# EUROPEAN PATENT APPLICATION

(11) **EP 3 270 612 A1**
(43) Date of publication of application: **17.01.2018**
(21) Application number: 17161080.1
(22) Date of filing: 15.03.2017
(51) Int. Cl.: H04W 4/00, H04N 1/00

(54) **IMAGE FORMING APPARATUS, IMAGE FORMING METHOD, AND METHOD BY THE SAME**

(30) Priority: 15.07.2016 JP 2016140870
(71) Applicant: Kabushiki Kaisha Toshiba, Minato-ku, Tokyo 105-8001 (JP); Toshiba TEC Kabushiki Kaisha, Tokyo 141-0032 (JP)
(72) Inventor: ODAGIRI, Hiroshi, Shinagawa-ku, Tokyo 141-8562 (JP)
(74) Representative: Takeuchi, Maya

(57) **Abstract**

In accordance with an embodiment, an image forming apparatus comprises a reader section, a data acquisition section, an image forming section and a control section. The reader section reads data corresponding to a non-contact wireless communication system. The data acquisition section acquires data of a printing object. The image forming section forms an image on the basis of the data acquired by the data acquisition section. The control section controls the data acquisition section to acquire the data of the printing object stored in an external device on the basis of identification information in a case in which the identification information for specifying a storage location of the printing object stored in the external device is included in the data read by the reader section.

## Description

### FIELD

The present invention relates to the field of an image-forming technology, and embodiments described herein relate more particularly to an image forming apparatus and the corresponding system, as well as a method for forming an image using an image forming apparatus and such an image forming method further comprising the step of reading data corresponding to a non-contact wireless communication system.

### BACKGROUND

Conventionally, there is an image forming apparatus such as a Multi-Function Peripheral (hereinafter, referred to as an "MFP") and a printer. The image forming apparatus prints data of a printing object acquired via a network. For example, the network includes a wireless communication line such as a Wi-Fi (registered trademark) and a Bluetooth (registered trademark) and a wired communication line such as a LAN.

As to a network within a specific range in which the MFP is connected, authority to use the network is regulated, and the use is limited from outside the specific range on occasions. A device located within the specific range sends a desired document (printing object) to the MFP via the network. The MFP can print the document received from the device located within the specific range. However, a device located outside the specific range is not allowed to use the network, and cannot carry out communication with the MFP via the network. The MFP cannot receive a document from the device located outside the specific range. Under the conditions as described above, there is a problem that the document cannot be printed.

To solve such problems, there is provided an image forming apparatus, comprising:
a reader section configured to read data corresponding to a non-contact wireless communication system;
a data acquisition section configured to acquire data of a printing object;
an image forming section configured to form an image on the basis of the data acquired by the data acquisition section; and
a control section configured to control the data acquisition section to acquire the data of the printing object stored in an external device relative to the image forming apparatus on the basis of identification information when the data read by the reader section comprises the identification information for specifying a storage location of the printing object stored in the external device in.

Preferably, when information for designating the printing object is added to the identification information, the control section controls the data acquisition section to acquire the data of the printing object stored in the external device on the basis of the information added to the identification information.

Preferably still, the reader section reads data comprising the identification information from a portable terminal of which communication with the image forming apparatus is not permitted through communication of a communication system different from the non-contact wireless communication system; and
the data acquisition section acquires the data of the printing object from the external device which is different from the portable terminal.

Preferably yet, the control section processes attribute information of the data read by the reader section on the basis of the attribute information regulated according to a communication standard of the non-contact wireless communication system.

Suitably, the non-contact wireless communication system comprises a near field communications system.

Suitably further, the identification information comprises information identifying data of the printing object at a unit of a file.

The invention also relates to an image forming system, comprising:
a reader means configured to read data corresponding to a non-contact wireless communication system;
a data acquisition means configured to acquire data of a printing object;
an image forming means configured to form an image on the basis of the data acquired by the data acquisition means; and
a control means configured to control the data acquisition means to acquire the data of the printing object stored in an external device relative to the image forming system on the basis of identification information when the data read by the reader means comprises the identification information for specifying a storage location of the printing object stored in the external device in.

The invention further relates to a method for forming an image using an image forming apparatus, comprising:
acquiring data of a printing object stored in an external device on the basis of identification information when read data comprises the identification information for specifying a storage location of the printing object stored in the external device; and
forming an image on the basis of the acquired data.

Preferably, the method further comprises:
adding information for designating the printing object to the identification information;
acquiring the data of the printing object stored in the external device on the basis of the information added to the identification information.

Preferably, the method further comprises:
reading data comprising the identification information from a portable terminal of which communication with an image forming apparatus is not permitted through communication of a communication system different from the non-contact wireless communication system; and
acquiring the data of the printing object from the external device which is different from the portable terminal.

Preferably still, the method further comprises:
processing attribute information of the data read on the basis of the attribute information regulated according to a communication standard of the non-contact wireless communication system.

Preferably yet, the non-contact wireless communication system comprises a near field communications system.

Suitably, the identification information comprises information identifying data of the printing object at a unit of a file.

The invention further concerns an image forming method, comprising:
reading data corresponding to a non-contact wireless communication system; and comprising the method for forming an image using an image forming apparatus according to any one of claims 8 to 13.

Suitably, the image forming method further comprises:
reading data comprising the identification information from a portable terminal of which communication with an image forming apparatus is not permitted through communication of a communication system different from the non-contact wireless communication system; and
acquiring the data of the printing object from the external device which is different from the portable terminal.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is an external view illustrating an example of the entire constitution of an image forming apparatus 100 according to an embodiment;
Fig. 2 is a diagram illustrating the constitution of a printing system including the image forming apparatus 100 according to the embodiment;
Fig. 3 is a diagram illustrating the hardware constitution of a server device 200 according to the embodiment;
Fig. 4 is a diagram illustrating the hardware constitution of a terminal device 300 according to the embodiment;
Fig. 5 is a diagram illustrating the hardware constitution of a portable terminal 400 according to the embodiment;
Fig. 6 is a functional diagram illustrating a controller 110 of the image forming apparatus 100 according to the embodiment;
Fig. 7 is a diagram illustrating a function of a NFC device;
Fig. 8 is a diagram illustrating a function of the NFC device;
Fig. 9 is a diagram illustrating a function of the NFC device;
Fig. 10 is a diagram illustrating a NDEF message;
Fig. 11 is a diagram illustrating the constitution of a NDEF record;
Fig. 12 is a view illustrating values of TNF and TYPE of the NDEF record shown in Fig. 11;
Fig. 13 is a flowchart illustrating an example of procedures of a print processing according to the embodiment; and
Fig. 14 is a flowchart illustrating an example of procedures of a print processing according to a modification.

### DETAILED DESCRIPTION

In accordance with an embodiment, an image forming apparatus comprises a reader section, a data acquisition section, an image forming section and a control section. The reader section reads data corresponding to a non-contact wireless communication system. The data acquisition section acquires data of a printing object. The image forming section forms an image on the basis of the data acquired by the data acquisition section. The control section controls the data acquisition section to acquire the data of the printing object stored in an external device on the basis of identification information in a case in which the identification information for specifying a storage location of the printing object stored in the external device is included in the data read by the reader section.

The above embodiment is applicable mutatis mutandis to an image forming system comprising the corresponding means.

Hereinafter, an image forming apparatus, an image forming method and a method by the image forming apparatus of an embodiment is described with reference to the accompanying drawings. Further, the same reference numerals are applied to the same elements in each figure.

### (Image Forming Apparatus 100)

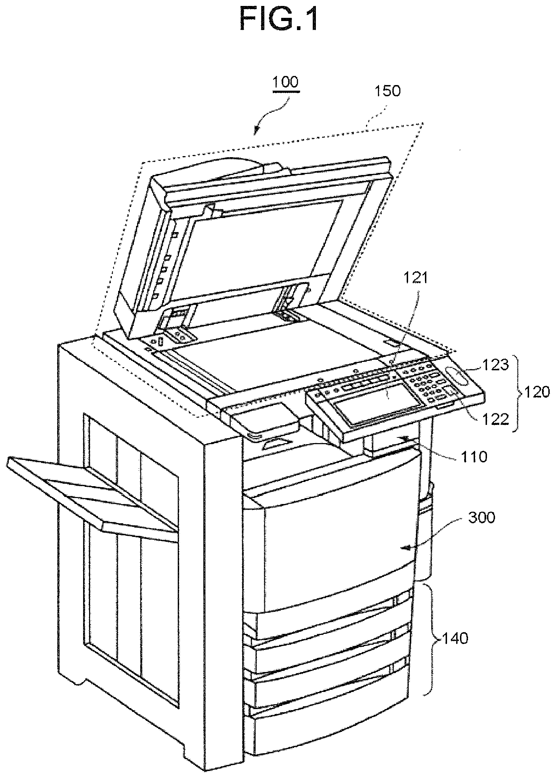

Fig. 1 is an external view illustrating an example of the entire constitution of the image forming apparatus 100 according to the embodiment. The image forming apparatus 100 is, for example, an MFP (Multi-Function Peripheral). The image forming apparatus 100 is equipped with a controller 110, a control panel 120, a printer section 130, a sheet housing section 140 and an image reading section 150. The printer section 130 of the image processing apparatus 100 may be a device for fixing a toner image or an inkjet type device.

The image forming apparatus 100 forms an image on a sheet with a developing agent such as toner. The sheet is, for example, a paper or a label paper. The sheet may be an optional sheet as long as the image forming apparatus 100 can form an image on the surface of the sheet.

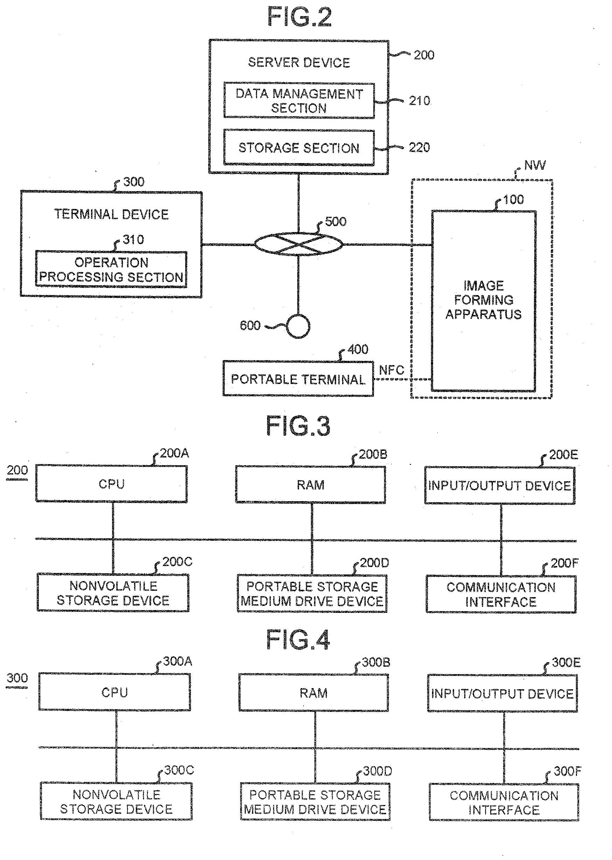

The controller 110 includes an arithmetic processing apparatus such as a CPU (Central Processing Unit), a memory and various interfaces. Interfaces with each section in the image forming apparatus 100 and a communication line 500 (refer to Fig. 2) are included in various interfaces. The memory includes a RAM (Random Access Memory) serving as a volatile storage device. The memory includes a ROM (Read Only Memory) serving as a nonvolatile storage device, an HDD (Hard disk drive) or an SSD (Solid State Drive). The controller 110 receives information for controlling the image forming apparatus 100 to control each section in the image forming apparatus 100. Details of the controller 110 are described later.

The control panel 120 includes a touch panel display 121, a keyboard 122, and a card reader 123 (reader section).

The touch panel display 121 includes a display and an operation detection section. The display is an image display device such as a liquid crystal display, an organic EL (Electro Luminescence) display and the like. The display displays various kinds of information relating to the image forming apparatus 100. The operation detection section receives an operation of a user. The operation detection section outputs a signal corresponding to the operation carried out by the user to the controller 110.

The keyboard 122 outputs a signal corresponding to the operation carried by the user to the controller 110.

The card reader 123 communicates with a card or a portable terminal by a non-contact wireless communication system. A near field wireless communication system (NFC (Near Field Communication)) is known as the non-contact wireless communication system. "ISO/IEC 14443", "ISO/IEC 15693" and "JIS X 6319" are disclosed as technologies relating to the NFC. In addition to the above technologies, specifications and the like formulated in the NFC Forum are disclosed. The card reader 123 can at least read out data from a card of the foregoing specification. In the following description, the NFC is exemplified and described. The card reader 123 reads, from an IC card or a portable terminal (hereinafter, referred to as an IC card) arranged nearby, data stored in a storage area inside the IC card. It is not necessary that the card reader 123 of the embodiment has a function of writing data to an IC card.

The printer section 130 generates an image on a sheet on the basis of image information generated by the image reading section 150 or image information received via a communication path. The printer section 130 forms the image with, for example, the following processing. The image forming section of the printer section 130 forms an electrostatic latent image on a photoconductive drum on the basis of the image information. The image forming section of the printer section 130 enables a developing agent to adhere to the electrostatic latent image to form a visible image. As a concrete example of the developing agent, toner is exemplified. The transfer section of the printer section 130 transfers the visible image on the sheet. The fixing section of the printer section 130 heats and pressures the sheet to enable the visible image to be fixed on the sheet. The sheet on which the image is formed may be a sheet housed in the sheet housing section 140 or a manually fed sheet.

The sheet housing section 140 houses a sheet used for the image formation by the printer section 130.

The image reading section 150 reads the image information of a read object as intensity of light. The image reading section 150 records the read image information. The recorded image information may be sent to another information processing apparatus via a network. The recorded image information may be used for the image formation on the sheet through the printer section 130.

The foregoing image forming apparatus 100 prints a printing object designated with the foregoing IC card by a simpler method. A portable terminal 400 described later is an example of the foregoing IC card.

### (Printing System Including the Image Forming Apparatus 100)

Fig. 2 is a diagram illustrating the constitution of the printing system including the image forming apparatus 100 according to the embodiment. The printing system shown in Fig. 2 includes the image forming apparatus 100, a server device 200, a terminal device 300 and the portable terminal 400. The image forming apparatus 100, the server device 200, the terminal device 300 and the portable terminal 400 are connected by the communication line 500, and can carry out communication via the communication line 500. At least a part of the foregoing communication may be carried out through wireless communication. For example, the portable terminal 400 may be connected with the communication line 500 via a wireless base station 600.

Communication destinations of the image forming apparatus 100, the server device 200, the terminal device 300 and the portable terminal 400 are restricted. The image forming apparatus 100 is allowed to communicate with the server device 200. The image forming apparatus 100 is not allowed to communicate with the terminal device 300 and the portable terminal 400 via the communication line 500.

For example, as to a network NW within a specific range in which the image forming apparatus 100 is connected in a communicable manner, authority to use the network NW is regulated. Furthermore, the use of the network NW is restricted from outside the network NW. A device (not shown) located in the network NW sends data of a desired document (printing object) to the image forming apparatus 100 via the network NW. The image forming apparatus 100 prints the document corresponding to the printing object in a case of receiving the data of the printing object from the device located in the network NW.

Incidentally, the terminal device 300 and the portable terminal 400 are located outside the network NW. The terminal device 300 and the portable terminal 400 are not allowed to use the network NW. For example, the terminal device 300 and the portable terminal 400 cannot carry out communication with the image forming apparatus 100 via the network NW.

For example, the communication line 500 includes the Internet. The server device 200 is a server connected with the Internet. The image forming apparatus 100, the terminal device 300 and the portable terminal 400 can be connected with the server device 200 via the Internet. The image forming apparatus 100 acquires data from the server device 200 via the Internet. The terminal device 300 and the portable terminal 400 send or receive data to or from the server device 200 via the Internet.

Hereinafter, the server device 200, the terminal device 300 and the portable terminal 400 are described in order.

### (Server Device 200)

The hardware constitution of the server device 200 includes the same constitution as an existing personal computer or server device.

Fig. 3 is a diagram illustrating the hardware constitution of the server device 200 according to the embodiment. The server device 200 is equipped with, for example, a CPU 200A, a RAM 200B, a nonvolatile storage device 200C, a portable storage medium drive device 200D, an input/output device 200E and a communication interface 200F. The communication interface 200F is an interface for connecting the server device 200 with the communication line 500. The server device 200 may be equipped with any form of processor instead of the CPU 200A, or may omit a part of each component shown in Fig. 3.

The CPU 200A carries out various processing described hereinafter by copying or decompressing stored programs on the RAM 200B to execute the programs. A program stored in the nonvolatile storage device 200C is included in the stored programs. Otherwise, a program stored in a portable storage medium mounted in the portable storage medium drive device 200D is included in the stored program. The RAM 200B is used as a working area through the CPU 200A. The nonvolatile storage device 200C is, for example, an HDD, an SSD, a flash memory and a ROM. A portable storage medium such as a DVD (Digital Versatile Disc), a CD (Compact Disc) and a SD card (registered trademark) is mounted in the portable storage medium drive device 200D. The input/output device 200E includes, for example, a keyboard or a mouse, a touch panel and a display device.

For example, as shown in Fig. 2, the server device 200 enables the CPU 200A to function as a data management section 210 by causing the CPU 200A to execute the program. The data management section 210 receives data of a desired document (printing object) to be printed on a sheet by the image forming apparatus 100 from an external device. Data (attribute information) corresponding to text information or image information of the document is included in the data of the printing object. For example, identification information indicating a storage location in which the data is stored, a file format and a file name are included in the foregoing attribute information. The server device 200 assigns a storage section 220 as a storage area for storing the data of the printing object to the storage area of the nonvolatile storage device 200C. The server device 200 writes the received data of the printing object to the storage section 220. A position of the storage section 220 in the network is specified by the identification information. For example, information such as a URI (Uniform Resource Identifier), a path and address information (IP address (Internet Protocol address)) is included in the foregoing identification information.

For example, the data management section 210 manages the data of the printing object stored in the storage section 220 at a unit of a file or at a unit of a folder storing files. The data management section 210 generates identification information for identifying a file or a folder. The data management section 210 specifies the data of the printing object stored in the storage section 220 by taking the identification information as a key. The data management section 210 notifies an external device of the foregoing identifying number by a method designated in advance. For example, the data management section 210 notifies an external device that requests writing of data or an external device instructed by an operation of a user of the identifying number. For example, the user is a user who requests the writing of the data of the printing object.

The data management section 210 receives a request including the foregoing identification information from the external device to carry out a processing according to the foregoing request.

The data management section 210 receives a data read request from the external device. For example, the data read request requests the read of the data of the printing object stored in the storage section 220 and the sending of the data of the printing object. The data read request includes the identification information for identifying the data of the printing object at a unit of a file or at a unit of a folder including files. The data management section 210 reads out the data of the printing object stored in the storage section 220 in response to the request by taking the identification information as the key and sends the data to the external device serving as a request source.

The data management section 210 may carry out authentication of a sending source of the data of the printing object and a request source requesting the sending of the data of the printing object. Otherwise, as a result of the foregoing authentication, the data management section 210 may receive instructions from the permitted sending source and request source. The server device 200 may adopt a general technique as the method of the foregoing authentication.

### (Terminal Device 300)

The hardware constitution of the terminal device 300 includes the same constitution as an existing personal computer or server device.

Fig. 4 is a diagram illustrating the hardware constitution of the terminal device 300 according to the embodiment. The terminal device 300 is equipped with, for example, a CPU 300A, a RAM 300B, a nonvolatile storage device 300C, a portable storage medium drive device 300D, an input/output device 300E and a communication interface 300F. The communication interface 300F is an interface for connecting the terminal device 300 with the communication line 500. The terminal device 300 may be equipped with any form of processor instead of the CPU 300A, or may omit a part of each component shown in Fig. 4.

The CPU 300A carries out various processing described hereinafter by copying or decompressing stored programs on the RAM 300B to executing the programs. A program stored in the nonvolatile storage device 300C or a program stored in a portable storage medium mounted in the portable storage medium drive device 300D is included in the stored programs. The RAM 300B is used as a working area through the CPU 300A. The nonvolatile storage device 300C is, for example, an HDD, an SSD, a flash memory and a ROM. A portable storage medium such as a DVD, a CD and a SD card is mounted in the portable storage medium drive device 300D. The input/output device 300E includes, for example, a keyboard or a mouse, a touch panel and a display device.

For example, the terminal device 300 enables the CPU 300A to function as an operation processing section 310 by causing the CPU 300A to execute the program. The operation processing section 310 receives an operation for storing the data of the printing object in the server device 200 to store the data in the server device 200. For example, the operation processing section 310 carries out a login procedure for the server device 200. After use is permitted by the server device 200, the operation processing section 310 sends the data of the printing object designed by the user and a mail address of an e-mail used by the user to the server device 200.

For example, the server device 200 notifies the foregoing mail address of the identification information for identifying the data of the printing object at a unit of a file or at a unit of a folder after storing the data of the printing object. The portable terminal 400 is used for browsing of the e-mail used by the user.

### (Portable Terminal 400)

The hardware constitution of the portable terminal 400 includes the same constitution as a portable information device such as an existing smartphone or tablet.

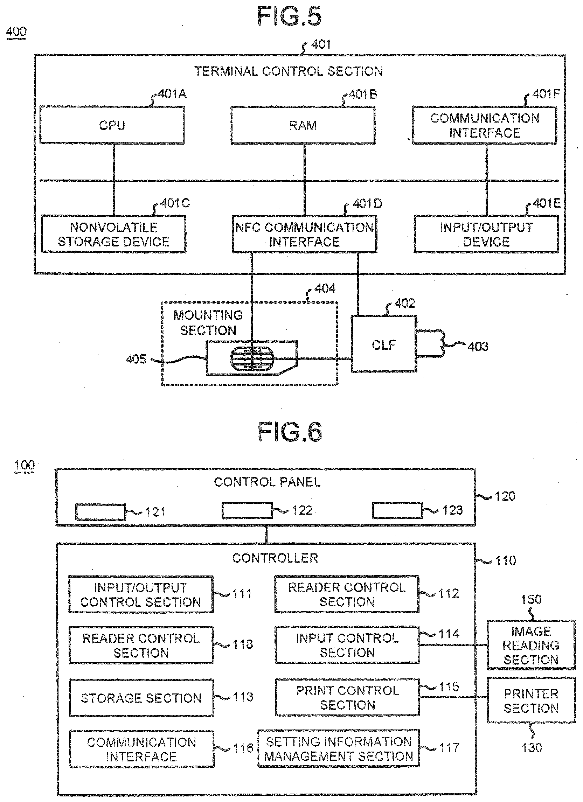

Fig. 5 is a diagram illustrating the hardware constitution of the portable terminal 400 according to the embodiment. The portable terminal 400 is equipped with, for example, a terminal control section 401, a CLF (Contactless Front-End) 402, a resonance section 403 and a mounting section 404. A detachable IC card 405 is mounted in the mounting section 404 of the portable terminal 400. The IC card 405 is connected with the terminal control section 401 and the CLF 402. The portable terminal 400 is mounted with the IC card 405 and thus can carry out communication by the NFC with the external device. The external device is, for example, the image forming apparatus 100.

The terminal control section 401 communicates with the IC card 405 and the CLF 402. The terminal control section 401 sends a command (processing request) to the IC card 405 and receives a response (processing response) as a result of a command processing by the IC card 405.

The CLF 402 communicates with the IC card 405 to be controlled by a communication control section in the IC card 405.

The resonance section 403 is connected with the CLF 402. The resonance section 403 is an antenna coil used for non-contact communication such as the NFC. The CLF 402 communicates with the external device by the non-contact wireless communication system such as the NFC via the resonance section 403.

The CLF 402 controls the communication by the NFC with the external device such as the image forming apparatus 100. For example, if arranged in the vicinity of the card reader 123 of the image forming apparatus 100, the CLF 402 detects a radio wave from the card reader 123. In response to the radio wave, the communication between the CLF 402 and the image forming apparatus 100 is started. The CLF 402 receives the read request of the data from the card reader 123 to notify the terminal control section 401 of the reception of the request. The CLF 402 returns desired data to the foregoing request in accordance with a communication standard of the NFC. The identification information for identifying the storage section 220 of the server device 200 is included in the desired data returned to the request. The desired data returned to the request may be stored in the CLF 402 in advance, or may be designated from the terminal control section 401 at the time of the reception of the request.

According to the above, the card reader 123 of the image forming apparatus 100 reads the returned data. Furthermore, the CLF 402 may not correspond to a usage form that uses the card reader 123 as the reader. In other words, it is not necessary that the CLF 402 has the function corresponding to the writing request of the data.

The IC card 405 stores information capable of identifying a user who uses a communication service via the wireless base station 600. The IC card 405 is, for example, a SIM (Subscriber Identity Module) card. The IC card 405 is possible to communicate with the terminal control section 401.

The terminal control section 401 is realized by, for example, a processor including a CPU. The terminal control section 401 collectively controls the portable terminal 400.

For example, the terminal control section 401 is equipped with a CPU 401A, a RAM 401B, a nonvolatile storage device 401C, a NFC communication interface 401D, an input/output device 401E and a communication interface 401F. The communication interface 401F includes a wireless communication section for communicating with the wireless base station 600. The terminal control section 401 may be equipped with any form of processor instead of the CPU 401A, or may omit a part of each component shown in Fig. 5.

The CPU 401A carries out various processing described hereinafter by copying or decompressing programs stored in the nonvolatile storage device 401C on the RAM 401B to executing the programs. The RAM 401B is used as a working area through the CPU 401A. The nonvolatile storage device 401C is, for example, a flash memory and a ROM. The NFC communication interface 401D is connected with the CLF 402 and the IC card 405. The input/output device 401E includes, for example, a keyboard, a touch panel and a display device.

For example, the terminal control section 401 functions as a wireless communication terminal by causing the CPU 401A to execute the program. The terminal control section 401 controls the communication interface 401F to communicate with the external device via the wireless base station 600 in response to the operation of the user detected by the input/output device 401E. The terminal control section 401 receives the notification indicating that the CLF 402 receives the read request of the data from the external device such as the card reader 123 from the CLF 402. The terminal control section 401 controls a signal to be sent from the CLF 402 on the basis of a result of the determination of the foregoing request. For example, in a case of receiving the read request of the data, the terminal control section 401 sends the identification information corresponding to the read request of the data from the CLF 402.

Fig. 6 is a functional diagram illustrating the controller 110 of the image forming apparatus 100 according to the embodiment.

The controller 110 is equipped with an input/output control section 111, a reader control section 112, a storage section 113, an input control section 114 and a print control section 115 (image forming section). Furthermore, the controller 110 is equipped with a communication interface 116 (data acquisition section), a setting information management section 117 and a control section 118.

The input/output control section 111 generates a display screen displayed on the touch panel display 121 of the control panel 120 through control of the control section 118. The input/output control section 111 acquires information from the touch panel display 121 and the keyboard 122 on the control panel 120 to notify the control section 118 of the information.

The reader control section 112 acquires data corresponding to the non-contact wireless communication system detected by the card reader 123 to notify the control section 118 of the data. The reader control section 112 notifies the card reader 123 of information for controlling a communication state. For example, the reader control section 112 has a function of a "Reader/Writer mode" in the NFC. Details of the NFC and the "Reader/Writer mode" are described later. Furthermore, a combination of the reader control section 112 and the card reader 123 is an example of the reader section.

The storage section 113 stores various kinds of information for realizing functions of the controller 110. Various kinds of information include a program, various kinds of setting information, data such as the data of the printing object to be printed as a document and data to be temporarily stored in addition to the foregoing data.

The input control section 114 realizes functions of the image reading section 150 through the control of the control section 118. The input control section 114 reads an image displayed on the surface of the sheet with the image reading section 150 to generate image data corresponding to the image.

The print control section 115 realizes functions of the printer section 130 through the control of the control section 118. For example, the print control section 115 forms an image on the basis of the data of the printing object, designated by the control section 118, which is acquired by the communication interface 116. The image formed on the basis of the data of the printing object corresponds to the document as the printing object. The print control section 115 prints the formed image on the sheet with the printer section 130.

The communication interface 116 is connected with the communication line 500. The communication interface 116 carries out the communication by a communication system different from the NFC. The communication system different from the NFC includes, for example, a LAN (IEEE802.3), a Wi-Fi (IEEE802.11) and a Bluetooth. The communication interface 116 acquires the data of the printing object through the communication via the communication line 500. For example, the communication interface 116 may acquire the data of the printing object from the server device 200 different from the portable terminal 400.

The setting information management section 117 manages various kinds of setting information to be used for various kinds of control by the control section 118. The setting information management section 117 stores various kinds of setting information in the storage section 113, and updates the information to a new value as necessary.

The control section 118 makes a request to send the data of the printing object corresponding to data including the identification data to the server device 200 identified by the identification data (identification information). For example, the foregoing identification data includes the address information of the storage area such as the URI and the IP address of the server device 200. The control section 118 forms an image based on the data of the printing object acquired from the server device 200.

The control section 118 acquires the data of the foregoing printing object from the storage area of the server device 200 through the data acquisition section in a case in which the information for designating the foregoing printing object is added to the identification data. Under the condition of the embodiment, the communication with the image forming apparatus 100 from the portable terminal 400 is not permitted. In this case, the card reader 123 calls the portable terminal 400 by the NFC to read the identification data and data including the information added to the identification data from the portable terminal 400. For example, the information added to the identification data is the file name of the data of the printing object.

Furthermore, even in a case in which the portable terminal 400 cannot communicate with the image forming apparatus 100 by a communication system different from the NFC, the portable terminal 400 acquires the data including the identification data. In other words, the portable terminal 400 may acquire the data including the identification data from the server device 200. The image forming apparatus 100 can call the portable terminal 400 by the NFC to acquire the data including the identification data from the portable terminal 400 by adopting the foregoing technique.

Even if there is no communication means between the portable terminal 400 and the image forming apparatus 100 other than the NFC, the image forming apparatus 100 can acquire the data of the printing object from the server device 200.

The processing, relating to the printing, which is carried out by the terminal control section 401 is arranged. In the processing relating to the print request for the image forming apparatus 100 by the terminal control section 401, for example, the following contents are included.
(1) The terminal control section 401 acquires position information (identification information) of the storage area (storage section 220) in which the data to be printed is stored.
(2) The terminal control section 401 stores the position information (identification information) of the storage area (storage section 220) in which the data to be printed is stored in the RAM 401B or the nonvolatile storage device 401C.
(3) The terminal control section 401 permits the response to the read request by the NFC.

Furthermore, details of the processing relating to the foregoing image forming apparatus 100 are described later.

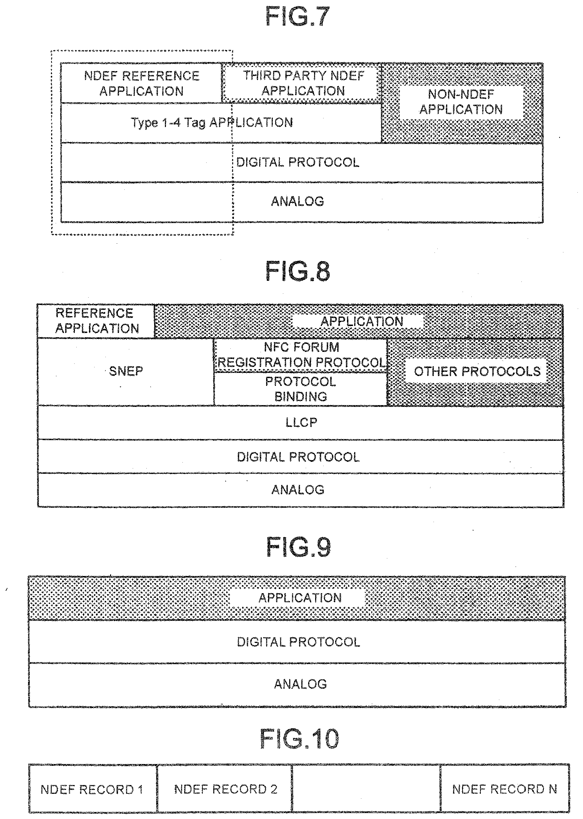

Fig. 7 to Fig. 9 are diagrams schematically illustrating functions of a NFC device. In each of Fig. 7 to Fig. 9, functions of communication are shown in the protocol stack.

In recent years, according to the communication standard relating to the NFC, a plurality of types of operation modes is regulated as functions of the NFC device. Further, various specifications relating to the NFC are formulated in the NFC Forum.

Fig. 7 illustrates the "Reader/Writer mode". Fig. 8 illustrates a "Peer-to-Peer mode". Fig. 9 illustrates a "Card Emulation mode". Among three types of operation modes shown in Fig. 7 to Fig. 9, a mode using the identification information indicating a specific storage area (storage location) is not limited to the "Reader/Writer mode". The image forming apparatus 100 detects data including the identification information indicating the specific storage area (storage location) on the basis of "Type 1-4 Tag operation" and "NDEF (NFC Data Exchange Format)". For example, the image forming apparatus 100 of the present embodiment realizes the communication with the portable terminal 400 in the "Reader/Writer mode". In this way, the image forming apparatus 100 identifies that the communication with the portable terminal 400 is different from communication realized in other operation modes.

Fig. 10 is a diagram illustrating a NDEF message. The use of the NDEF message is formulated in the "Reader/Writer mode" under some condition.

The NDEF message shown in Fig. 10 includes a plurality of NDEF records consisting of NDEF record 1, NDEF record 2, ..., and NDEF record N. The NDEF message shown in Fig. 10 is an example based on a NDEF format. The NDEF message includes one or more NDEF records. In the NDEF message, the plurality of the NDEF records can be contained in one telegram. The image forming apparatus 100 can use the foregoing NDEF message to read out different kinds of information in one processing.

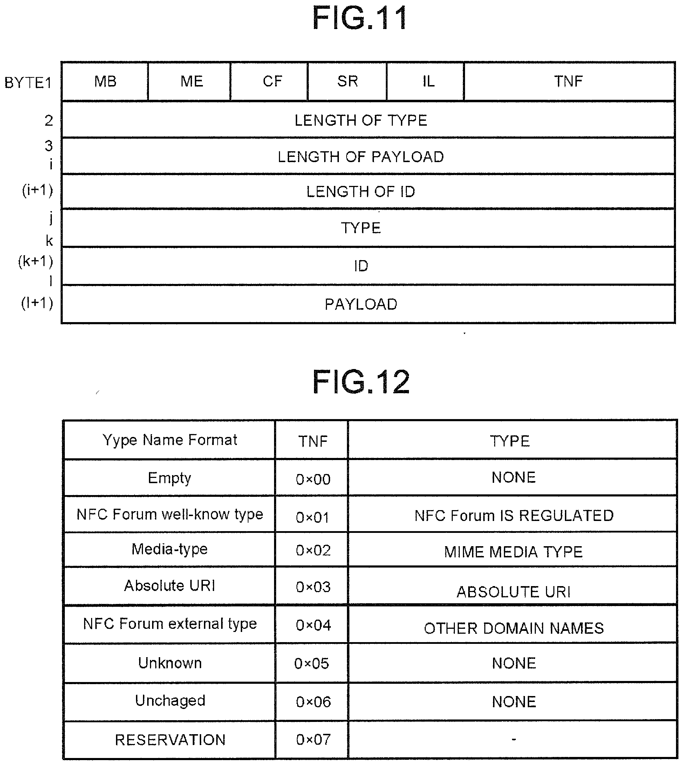

Fig. 11 is a diagram illustrating the constitution of the NDEF record. In the NDEF record, various kinds of information including "header information", "length of TYPE", "length of ID", "length of PAYLOAD", "TYPE", "ID" and "PAYLOAD" is included. In the header information, various kinds of information including "MB", "ME", "CF", "SR", "IL" and "TNF" is included. The "MB (Message Begin)" and the "ME (Message End)" are flags indicating begin and end of the NDEF record. The "CF", the "SR" and the "IL" are flags in a case in which the NDEF records are combined and used. The meaning of the information included in the "PAYLOAD" is determined by the "TNF (Type Name Format)" and the "TYPE".

Fig. 12 is a diagram illustrating values of the TNF and the TYPE of the NDEF record shown in Fig. 11.

For example, in a case in which XML data is described in the "PAYLOAD", it is regulated that the value of the "TNF" is set to "0*03" and the value of the "TYPE" is set to "absolute URI".

For example, in a case in which the value of the "TNF" is set to "0*01", the value of the "TYPE" and a description method of the "PAYLOAD" are regulated. For example, in a case in which the URI record is described in the PAYLOAD, the value of the "TYPE" is ""U" (0*55)". Furthermore, the value of the "PAYLOAD" is a combination of "URI identification code" and "rest of URI".

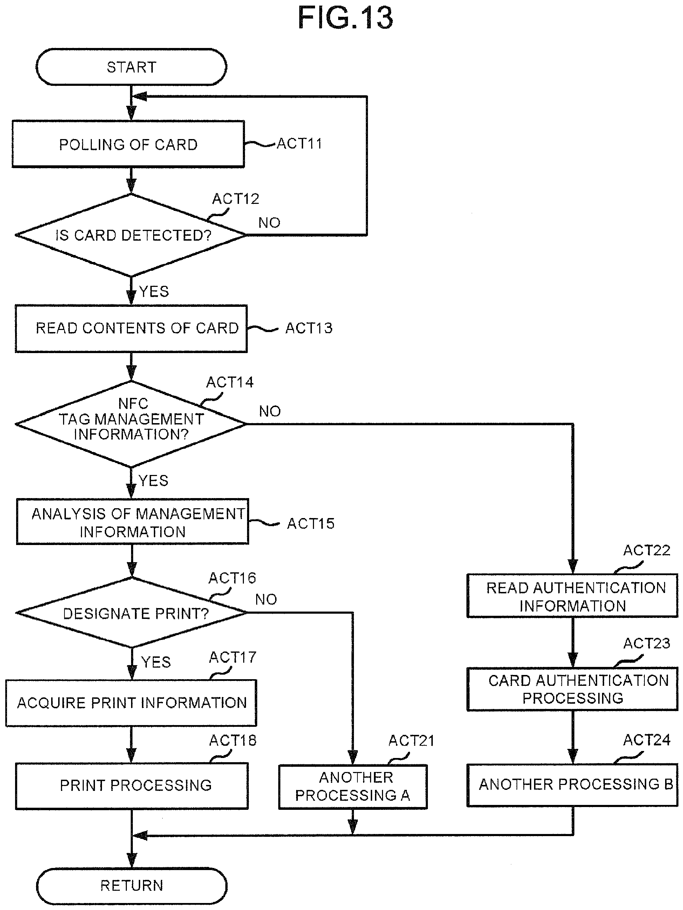

Fig. 13 is a flowchart illustrating an example of procedures of a print processing according to the embodiment. The print processing described hereinafter indicates an example in a case in which the value of the "TNF" relating to the NDEF information is 0*01 and the value of the "TYPE" is ""U"".

Firstly, the controller 110 polls a card regularly with the card reader 123 (ACT 11). The portable terminal 400 responds through a predetermined procedure in a case of detecting a signal from the card reader 123. Furthermore, the controller 110 identifies the portable terminal 400 as a card like NFC specification. In the description of the processing shown hereinafter a processing for detecting the portable terminal 400 as a card indicates "detection of a card".

Next, the controller 110 determines whether or not the card is detected (ACT 12). For example, the controller 110 detects the response from the card to determine the detection of the card. If the card is not detected according to a result of the determination (NO in ACT 12), the controller 110 proceeds to the processing in ACT 11.

If the card is detected according to the result of the determination (Yes in ACT 12), the controller 110 reads out contents of the card (ACT 13).

Next, the controller 110 determines whether or not NFC tag management information is desired information for carrying out the print processing on the basis of the NFC tag management information (ACT 14). For example, the NFC tag management information includes information indicating a "TYPE 1-4 Tag operation" in the "Reader/Writer mode".

If the NFC tag management information is included (YES in ACT 14), the controller 110 analyses the NFC tag management information (ACT 15). The controller 110 analyses whether or not the NFC tag management information includes tag information assigned to the image forming apparatus 100.

Next, the controller 110 determines whether or not the NFC tag management information includes information for designating the print processing on the basis of a result of the analysis in ACT 15 (ACT 16). For example, the address information for designating a storage area in which data for printing is stored is included in the information for designating the print processing.

If the NFC tag management information includes the information for designating the print processing (YES in ACT 16), the controller 110 acquires print information (ACT 17).

Next, the controller 110 carries out the print processing on the acquired print information (ACT 18), and ends a series of the illustrated processing.

If the NFC tag management information does not include the information for designating the print processing (NO in ACT 16), the controller 110 carries out another processing A designated by the NFC tag management information (ACT 21). If the processing in ACT 21 is ended, the controller 110 ends a series of the illustrated processing.

If the NFC tag management information is not included (NO in ACT 14), the controller 110 reads out authentication information (ACT 22).

Next, the controller 110 carries out an authentication processing of the card (ACT 23). The controller 110 carries out another processing B permitted according to a result of the authentication processing of the card (ACT 24). If the processing in ACT 24 is ended, the controller 110 ends a series of the illustrated processing.

According to the above, the controller 110 carries out a predetermined processing on the basis of attribute information regulated according to the communication standard of the non-contact wireless communication system. The foregoing predetermined processing includes a processing associated with the attribute information of the data read by the card reader 123. The foregoing attribute information includes, for example, the position information (address information and the like) for identifying the storage location of the printing object.

According to the embodiment, the image forming apparatus 100 includes the card reader 123, the communication interface 116, the print control section 115 and the control section 118. The card reader 123 reads the data corresponding to the non-contact wireless communication system. The communication interface 116 acquires the data of the printing object. The print control section 115 forms the image on the basis of the data acquired by the communication interface 116. The control section 118 controls the communication interface 116 to acquire the data of the printing object stored in the external device on the basis of the identification information in a case in which the identification information for specifying the storage location of the printing object stored in the external device is included in the data read by the card reader 123. In this way, the printing object stored in the external device can be printed by a simpler method.

### (Modification 1 of the Embodiment)

The modification 1 of the embodiment is described. In the foregoing embodiment, a case in which two determination processing are carried out by reading the portable terminal 400 with the image forming apparatus 100 is exemplified. The two determination processing consists of the determination of the print processing (ACT 16) and the determination of the authentication processing (ACT 14) as shown in Fig. 13. Instead of this, in the modification 1, the portable terminal 400 is used for the determination of the print processing and an IC card different from the portable terminal 400 is used for the determination of the authentication processing.

According to the foregoing modification 1, in addition to being capable of achieving the same effect as the embodiment, in a case in which uses of the print processing and the authentication processing are different, a procedure for aligning all the processing to the portable terminal 400 can be simplified.

### (Modification 2 of the Embodiment)

The modification 2 of the embodiment is described. In the print processing shown in the present modification, a determination standard for identifying the print processing and another processing is different from that in the foregoing embodiment.

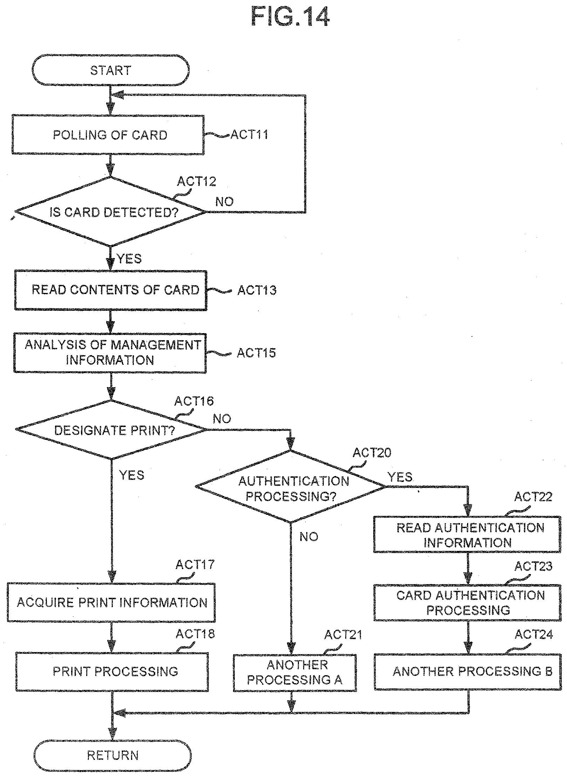

Fig. 14 is a flowchart illustrating an example of procedures of the print processing according to the modification.

Firstly, the controller 110 polls a card regularly with the card reader 123 (ACT 11). The portable terminal 400 responds through a predetermined procedure in a case of detecting a signal from the card reader 123. Furthermore, the controller 110 identifies the portable terminal 400 as a card like NFC specification. In the description of the processing shown hereinafter, a processing for detecting the portable terminal 400 as a card indicates "detection of a card".

Next, the controller 110 determines whether or not the card is detected (ACT 12). For example, the controller 110 detects the response from the card to determine the detection of the card. If the card is not detected according to a result of the determination (NO in ACT 12), the controller 110 proceeds to the processing in ACT 11.

If the card is detected according to the result of the determination (Yes in ACT 12), the controller 110 reads out contents of the card (ACT 13).

Next, the controller 110 analyses the NFC tag management information (ACT 15). The controller 110 analyses whether or not the NFC tag management information includes tag information assigned to the image forming apparatus 100.

Next, the controller 110 determines whether or not the NFC tag management information includes information for designating the print processing on the basis of a result of the analysis in ACT 15 (ACT 16). For example, a NDEF record including the URI for designating a storage area in which data for printing is stored is included in the information for designating the print processing.

If the NFC tag management information includes the information for designating the print processing (YES in ACT 16), the controller 110 acquires print information (ACT 17).

Next, the controller 110 carries out the print processing on the acquired print information (ACT 18), and ends a series of the illustrated processing.

If the NFC tag management information does not include the information for designating the print processing (NO in ACT 16), the controller 110 determines whether or not it is the authentication processing of the card (ACT 20).

If it is not the authentication processing of the card (NO in ACT 20), the controller 110 carries out another processing A designated by the NFC tag management information (ACT 21). If the processing in ACT 21 is ended, the controller 110 ends a series of the illustrated processing.

If it is the authentication processing of the card (Yes in ACT 20), the controller 110 reads out the authentication information (ACT 22).

Next, the controller 110 carries out the authentication processing of the card (ACT 23). The controller 110 carries out another processing B permitted according to a result of the authentication processing of the card (ACT 24). If the processing in ACT 24 is ended, the controller 110 ends a series of the illustrated processing.

According to the foregoing modification 2, the same effect as the foregoing embodiment can be achieved.

According to several embodiments described above, the image forming apparatus 100 includes the card reader 123, the communication interface 116, the print control section 115 and the control section 118. The card reader 123 reads the data corresponding to the non-contact wireless communication system. The communication interface 116 acquires the data of the printing object. The print control section 115 forms the image on the basis of the data acquired by the communication interface 116. The control section 118 controls the communication interface 116 to acquire the data of the printing object stored in the external device on the basis of the identification information in a case in which the identification information for specifying the storage location of the printing object stored in the external device is included in the data read by the card reader 123. In this way, the printing object stored in the external device can be printed by a simpler method.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

## Claims

1. An image forming apparatus, comprising:
a reader section configured to read data corresponding to a non-contact wireless communication system;
a data acquisition section configured to acquire data of a printing object;
an image forming section configured to form an image on the basis of the data acquired by the data acquisition section; and
a control section configured to control the data acquisition section to acquire the data of the printing object stored in an external device relative to the image forming apparatus on the basis of identification information when the data read by the reader section comprises the identification information for specifying a storage location of the printing object stored in the external device in.

2. The image forming apparatus according to claim 1, wherein
when information for designating the printing object is added to the identification information, the control section controls the data acquisition section to acquire the data of the printing object stored in the external device on the basis of the information added to the identification information.

3. The image forming apparatus according to claim 1 or 2, wherein
the reader section reads data comprising the identification information from a portable terminal of which communication with the image forming apparatus is not permitted through communication of a communication system different from the non-contact wireless communication system; and
the data acquisition section acquires the data of the printing object from the external device which is different from the portable terminal.

4. The image forming apparatus according to any one of claims 1 to 3, wherein
the control section processes attribute information of the data read by the reader section on the basis of the attribute information regulated according to a communication standard of the non-contact wireless communication system.

5. The image forming apparatus according to any one of claims 1 to 4, wherein
the non-contact wireless communication system comprises a near field communications system.

6. The image forming apparatus according to any one of claims 1 to 5, wherein
the identification information comprises information identifying data of the printing object at a unit of a file.

7. An image forming system, comprising:
a reader means configured to read data corresponding to a non-contact wireless communication system;
a data acquisition means configured to acquire data of a printing object;
an image forming means configured to form an image on the basis of the data acquired by the data acquisition means; and
a control means configured to control the data acquisition means to acquire the data of the printing object stored in an external device relative to the image forming system on the basis of identification information when the data read by the reader means comprises the identification information for specifying a storage location of the printing object stored in the external device in.

8. A method for forming an image using an image forming apparatus, comprising:
acquiring data of a printing object stored in an external device on the basis of identification information when read data comprises the identification information for specifying a storage location of the printing object stored in the external device; and
forming an image on the basis of the acquired data.

9. The method according to claim 8, further comprising:
adding information for designating the printing object to the identification information;
acquiring the data of the printing object stored in the external device on the basis of the information added to the identification information.

10. The method according to claim 8 or 9, further comprising:
reading data comprising the identification information from a portable terminal of which communication with an image forming apparatus is not permitted through communication of a communication system different from the non-contact wireless communication system; and
acquiring the data of the printing object from the external device which is different from the portable terminal.

11. The method according to any one of claims 8 to 10, further comprising:
processing attribute information of the data read on the basis of the attribute information regulated according to a communication standard of the non-contact wireless communication system.

12. The method according to any one of claims 8 to 11, wherein
the non-contact wireless communication system comprises a near field communications system.

13. The method according to any one of claims 8 to 12, wherein
the identification information comprises information identifying data of the printing object at a unit of a file.

14. An image forming method, comprising:
reading data corresponding to a non-contact wireless communication system; and comprising the method for forming an image using an image forming apparatus according to any one of claims 8 to 13.

15. The image forming method according to claim 14, further comprising:
reading data comprising the identification information from a portable terminal of which communication with an image forming apparatus is not permitted through communication of a communication system different from the non-contact wireless communication system; and
acquiring the data of the printing object from the external device which is different from the portable terminal.
